# EUROPEAN PATENT APPLICATION

(11) **EP 4 660 613 A1**
(43) Date of publication of application: **10.12.2025**
(21) Application number: 24750379.0
(22) Date of filing: 01.02.2024
(51) Int. Cl.: G01N 21/65, G01N 15/1434, G02B 21/00

(54) **RAMAN SPECTROMETER AND RAMAN SPECTROMETRY**

(30) Priority: 03.02.2023 JP 2023015370
(71) Applicant: The University of Osaka, Osaka 565-0871 (JP)
(72) Inventor: FUJITA Katsumasa, Suita-shi, Osaka 565-0871 (JP); LINDLEY Matthew Mark, Suita-shi, Osaka 565-0871 (JP); KUBO Toshiki, Suita-shi, Osaka 565-0871 (JP)
(74) Representative: Banse & Steglich Patentanwälte PartmbB
(86) International application number: PCT/JP2024/003220
(87) International publication number: WO 2024/162430

(57) **Abstract**

A Raman spectroscopic measuring apparatus (1) includes: a first irradiation optical system (100) configured to concentrate laser light (L1) for laser trapping into a first line beam extending along the channel and apply the concentrated laser light to a light-concentrated position; a second irradiation optical system (300) configured to concentrate laser light for laser trapping into a second line beam (L2) extending along the channel and apply the concentrated laser light to the light-concentrated position; a spectroscope (510) configured to spectrally disperse Raman scattered light generated at the light-concentrated position and detect the spectrally-dispersed Raman scattered light by a two-dimensional array photodetector including pixels arranged along a line direction of a line beam; and converging means for converging the particles on an upstream side of the light-concentrated position in the channel.

## Description

### Technical Field

The present disclosure relates to a Raman spectroscopic measuring apparatus and a Raman spectroscopic measuring method, and in particular, to a spectroscopic measuring apparatus and a spectroscopic measuring method for spectroscopically measuring Raman scattered light generated in a sample.

### Background Art

Non-patent Literature 1 discloses flow-type Raman spectroscopic measurement using laser trapping. In Non-patent Literature 1, trapping laser light having a wavelength of 1,064 nm and excitation light having a wavelength of 532 nm are applied to a sample.

Non-patent Literature 2 discloses a combination of acoustic convergence and optical trapping. In Fig. 1 of Non-patent Literature, a dielectric mirror is provided above a capillary and a piezo transducer is provided above the dielectric mirror. Particles are confined by the piezo transducer. Laser light for laser trapping is focused on the sample by a lens.

### Citation List

### Non Patent Literature

[Non-patent Literature 1]
   "Automated analysis of single cells using Laser Tweezers Raman Spectroscopy", Analyst, 2016,141 https://pubs.rsc.org/en/content/articlelanding/2016/an/c5an01851j#!div Abstract
[Non-patent Literature 2]
   "Combined acoustic and optical trapping", Biomed. Opt. Express 2, 2859-2870 (2011) https://opg.optica.org/boe/fulltext.cfm?uri=boe-2-10-2859&id=222764

### Summary of Invention

In flow cytometry, particle analyses, nano/micro-material engineering, and the like, it is necessary to control the flow of minute particles in a channel. In general, particles are converged acoustically, hydrodynamically, or using inertia or the like. However, these methods have limitations. For example, acoustic convergence is not effective for particles smaller than 1 µm. Further, hydrodynamic convergence cannot be achieved at a low flow velocity. Further, inertial convergence requires irregularities, i.e., protrusions and recesses, on the flow path and is affected by the flow velocity and the particle diameter. Further, there is also a problem that particles cannot flow through an expected position because they receive a pressure caused by light applied for the analysis. Due to these problems, there is a problem that minute particles cannot be efficiently analyzed.

The present disclosure has been made in view of the above-described matters, and an object thereof is to provide a Raman spectroscopic measuring apparatus and a Raman spectroscopic measuring method capable of converging particles at a proper position and thereby efficiently spectroscopically measuring Raman scattered light.

A Raman spectroscopic measuring apparatus according to an embodiment is a Raman spectroscopic measuring apparatus configured to measure a Raman spectrum of particles contained in a sample flowing in a channel, and including: a first irradiation optical system configured to concentrate laser light for laser trapping into a first line beam extending along the channel and apply the concentrated laser light to a light-concentrated position in the channel from a first direction; a second irradiation optical system configured to concentrate laser light for laser trapping into a second line beam extending along the channel and apply the concentrated laser light to the light-concentrated position from a second direction opposite to the first direction; and a spectroscope configured to spectrally disperse Raman scattered light generated at the light-concentrated position and detect the spectrally-dispersed Raman scattered light by a two-dimensional array photodetector including pixels arranged along a direction corresponding to a line direction of a line beam.

The above-described Raman spectroscopic measuring apparatus may include converging means for converging the particles on an upstream side of the light-concentrated position in the channel.

In the above-described Raman spectroscopic measuring apparatus, the two-dimensional array photodetector may transfer a signal charge generated at each pixel in a transfer direction corresponding to the line direction, accumulate the transferred signal charges, and collectively read out the accumulated signal charges, and a moving speed of the particles in the channel may be substantially equal to a transfer speed of charges in the two-dimensional array photodetector.

In the above-described Raman spectroscopic measuring apparatus, the converging means may include a transducer configured to generate a sound wave in the channel.

In the above-described Raman spectroscopic measuring apparatus, the laser light for the laser trapping may serve as excitation light.

The above-described Raman spectroscopic measuring apparatus may further include a camera configured to take an image of a sample at the light-concentrated position, and the light-concentrated position in the channel may be adjusted based on the photographed image taken by the camera.

The above-described Raman spectroscopic measuring apparatus may further include a camera configured to take an image of a sample at the light-concentrated position, and a flow velocity of the sample in the channel may be adjusted based on the photographed image taken by the camera.

In the above-described Raman spectroscopic measuring apparatus, in a measurement optical system from the channel to the spectroscope, a magnification may be such a magnification that a size of a pixel in the two-dimensional array photodetector is a size corresponding to a size of the particle.

The above-described Raman spectroscopic measuring apparatus may further include an optical scanner configured to scan the laser light in an optical-axis direction of an objective lens into which the Raman scattered light enters, and at the light-concentrated position of the laser light, the first and second irradiation optical systems may concentrate the laser light so as to become smaller than the sample.

In the above-described Raman spectroscopic measuring apparatus, the first and second irradiation optical systems may concentrate the laser light so as to become smaller than the channel at the light-concentrated position of the laser light, and a line direction of the first and second line beams may be tilted from a channel direction of the channel on a plane orthogonal to an optical-axis direction of the first irradiation optical system.

A Raman spectroscopic measuring method according to an embodiment is a Raman spectroscopic measuring method for measuring a Raman spectrum of particles contained in a sample flowing in a channel, including: a step of concentrating laser light for laser trapping into a first line beam extending along the channel and applying the concentrated laser light to a light-concentrated position in the channel from a first direction; a step of concentrating laser light for laser trapping into a second line beam extending along the channel and applying the concentrated laser light to the light-concentrated position from a second direction opposite to the first direction; and a step of spectrally dispersing Raman scattered light generated at the light-concentrated position and detecting the spectrally-dispersed Raman scattered light by a two-dimensional array photodetector including pixels arranged along a direction corresponding to a line direction of a line beam.

In the above-described Raman spectroscopic measuring method, the particles may be converged on an upstream side of the light-concentrated position in the channel.

In the above-described Raman spectroscopic measuring method, the two-dimensional array photodetector may transfer a signal charge generated at each pixel in a transfer direction corresponding to the line direction, accumulate the transferred signal charges, and collectively read out the accumulated signal charges, and a moving speed of the particles in the channel may be substantially equal to a transfer speed of charges in the two-dimensional array photodetector.

In the above-described Raman spectroscopic measuring method, the particles may be converged by a transducer configured to generate a sound wave in the channel.

In the above-described Raman spectroscopic measuring method, the laser light for the laser trapping may serve as excitation light.

In the above-described Raman spectroscopic measuring method, a camera may take an image of a sample at the light-concentrated position, and a flow velocity of the sample in the channel may be adjusted based on the photographed image taken by the camera.

In the above-described Raman spectroscopic measuring method, in a measurement optical system from the channel to the spectroscope, a magnification may be such a magnification that a size of a pixel in the two-dimensional array photodetector is a size corresponding to a size of the particle.

According to the present invention, it is possible to provide a spectroscopic measuring apparatus and a spectroscopic measuring method capable of converging particles at a proper position and thereby efficiently spectroscopically measuring Raman scattered light.

### Brief Description of Drawings

Fig. 1 is a schematic diagram showing an optical system of a spectroscopic measuring apparatus;
Fig. 2 is a perspective view schematically showing a configuration of a sample and its surroundings;
Fig. 3 is a schematic diagram for explaining the behavior of particles in a channel;
Fig. 4 is a schematic diagram for explaining the adding-up of signal charges in a photodetector;
Fig. 5 is a graph showing results of measurements of Raman spectra;
Fig. 6 is a drawing for explaining a configuration around a sample and an objective lens;
Fig. 7 is a graph showing changes in the intensity of Raman light over time;
Fig. 8 shows graphs showing results of spectroscopic measurement of Raman scattered light;
Fig. 9 shows graphs and the like showing results of spectroscopic measurement of Raman scattered light;
Fig. 10 shows graphs showing results of spectroscopic measurement of Raman scattered light;
Fig. 11 is a schematic diagram showing an optical system of a spectroscopic measuring apparatus;
Fig. 12 shows a graph and the like for explaining a case where laser light is scanned in the optical-axis direction of an objective lens;
Fig. 13 shows a graph and the like for explaining a line direction in a case where a channel is illuminated by sheet illumination tilted with respect to the channel; and
Fig. 14 shows a graph and the like for explaining a line direction in a case where a channel is illuminated by two sheet illumination lights tilted at different angles.

### Description of Embodiments

Embodiments to which the present invention can be applied will be described hereinafter. The following description is given to explain embodiments according to the present invention, and the present invention is not limited to the embodiments described below. For clarifying the explanation, the following description are omitted and simplified as appropriate. Further, those skilled in the art will be able to easily change, add, or convert elements of the embodiments described below within the scope of the present invention. Note that elements to which the same reference numerals (or symbols) are assigned are elements similar to each other throughout the drawings, and descriptions thereof will be omitted as appropriate.

### First Embodiment

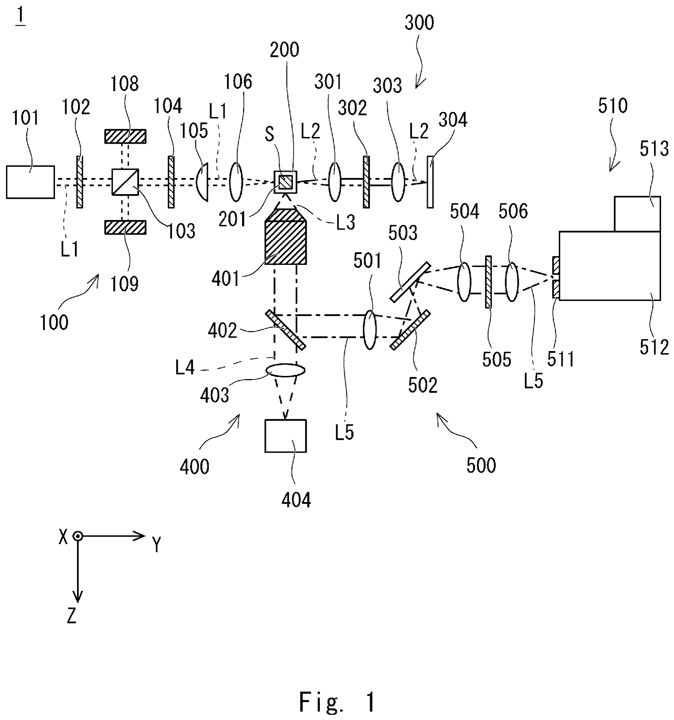

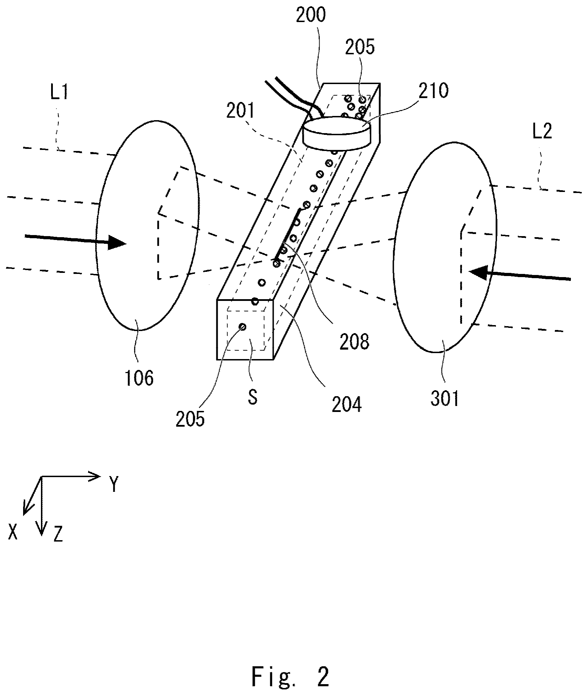

A spectroscopic measuring apparatus according to a first embodiment and its measuring method will be described with reference to Figs. 1 and 2. Fig. 1 is a schematic diagram showing an optical system of a spectroscopic measuring apparatus 1. Fig. 2 is a schematic diagram showing a configuration of a sample S and its surroundings. The spectroscopic measuring apparatus 1 includes a first irradiation optical system 100, a second irradiation optical system 300, an observation optical system 400, and a measurement optical system 500 for spectroscopic measurement.

Note that the spectroscopic measuring apparatus 1 is spectroscopically measuring the sample S, which is flowing in a capillary 201. More specifically, the sample S is held by a sample holder 200. The sample holder 200 is, for example, a chip including a capillary 201. The capillary 201 is, for example, a micro-channel. The capillary 201 is disposed along the X direction. The sample holder 200 is formed of a transparent substrate made of, for example, resin or glass.

As shown in Fig. 2, the sample S contains a plurality of particles 205 and a fluid 204 for making particles 205 flow therewith. The particles 205 flow in the X direction in the capillary 201 together with the fluid 204 by a pump (not shown) or the like. The particles 205 may be biological cells, molecules, or the like having sizes in the order of micrometers or nanometers. The fluid 204 may be water, a culture fluid, or the like.

To simplify the explanation, an XYZ three-dimensional orthogonal coordinate system will be used for the description. The Z direction is the detection direction. The Z direction is the direction parallel to the optical axis of an objective lens 401. The XY plane is a plane orthogonal to the optical axis of the detection light, and is a plane parallel to the plane on which the sample is disposed. The Y direction is the optical-axis direction of laser light L1 which is applied to the sample S. That is, the Y direction is the direction parallel to the optical axis of a lens 106 for concentrating the laser light L1 on the sample. The X direction is the longitudinal direction of the capillary 201 in which the sample flows.

Firstly, the first irradiation optical system 100 will be described. The first irradiation optical system 100 includes a laser light source 101, a λ/2 plate 102, a Glan-laser prism 103, a laser line filter 104, a lens 105, and a lens 106. The first irradiation optical system 100 is an optical system between the laser light source 101 and the capillary 201. Further, the first irradiation optical system 100 may include a beam expander for increasing the beam diameter.

The laser light source 101 generates monochromatic laser light L1. The laser light source 101 is, for example, an Nd/YVO4 laser that emits CW (Continuous Wave) light having a wavelength of 532 nm. The laser light source 101 generates linearly-polarized laser light L1. Laser light emitted from the laser light source 101 is first irradiation light which is incident on the sample S from the +Y direction. The laser light L1 serves as illumination light for illuminating the sample S. In Raman spectroscopic measurement, the laser light L1 serves as excitation light for exciting the sample S. Further, the laser light L1 is used for laser trapping for trapping particles contained in the sample S.

The laser light L1 emitted from the laser light source 101 enters the Glan-laser prism 103 through the λ/2 plate 102. The λ/2 plate 102 imparts a phase difference between two polarization components of the laser light L1. As a result, the laser light L1 becomes linearly-polarized light polarized in a desired polarization direction.

The Glan-laser prism 103 is a polarization beam splitter that branches light according to the polarization state. The optical axis of the Glan-laser prism 103 along which the light passes therethrough is parallel to the linear polarization direction of the laser light L1. Therefore, the Glan-laser prism 103 lets the linearly-polarized component of the laser light L1 pass therethrough.

Further, the linearly-polarized component orthogonal to the axis of the Glan-laser prism 103 along which the light passes therethrough is reflected in the direction toward a beam dump 108. The beam dump 108 absorbs this light having the linearly-polarized component. The laser light L1, which has passed through the Glan-laser prism 103, enters the laser line filter 104. The laser line filter 104 is a filter that lets light having a wavelength of 532 nm, which is the laser wavelength, pass therethrough. The laser line filter 104 blocks light having wavelengths other than the laser wavelength so that the sample S is not irradiated with such light.

The laser light L1, which has passed through the laser line filter 104, enters the lens 105. The lens 105 is a cylindrical lens. The lens 105 concentrates the laser light L1 in one direction on a plane orthogonal to the optical axis. The laser light L1 exiting from the lens 105 enters the lens 106. The lens 106 concentrates the laser light L1 on the sample S, which is flowing in the capillary 201. The lenses 105 and 106 concentrate the laser light L1 so that the laser light L1 becomes a line beam extending along the direction of the capillary 201. Note that the laser light L1 becomes a line beam extending in the direction parallel to the direction of the capillary 201 (X direction), but may be slightly tilted therefrom.

For example, sheet-like illumination is formed by using a cylindrical lens in the first irradiation optical system 100. For example, the lens 105 concentrates the laser light L1 in the Z direction, but does not concentrate it in the X direction. The laser light L1 uniformly illuminates a wide area extending in the X direction on the sample S. For example, an area sufficiently wider than the field of view of the objective lens 401 may be uniformly illuminated by the laser light L1.

The laser light L1 exiting from the lens 106 is scattered in the sample S and enters the objective lens 401. The objective lens 401 is a dry objective lens having a NA of 0.95 and a magnification of 40. Needless to say, the objective lens 401 is not limited to the objective lens having the aforementioned NA and magnification. The scattered light that comes from the sample S and enters the objective lens 401 is referred to as scattered light L3. A part of the laser light L1 excites particles 205 of the sample S. When the laser light L1 excites particles 205, Raman scattered light is generated by the particles 205. A part of the Raman scattered light enters the objective lens 401. Therefore, the scattered light traveling toward the objective lens 401 contains the part of the Raman scattered light.

Further, a part of the laser light L1 passes through the capillary 201. The part of the laser light L1 that has passed through the capillary 201 is referred to as laser light L2. The laser light L2 propagates through the second irradiation optical system 300. Next, the second irradiation optical system 300 will be described.

The second irradiation optical system 300 is an optical system between the sample S and a mirror 304. The second irradiation optical system 300 includes a lens 301, a λ/4 plate 302, a lens 303, and the mirror 304. The optical axes of the lenses 301 and 303 are coaxial with the optical axis of the lens 106. Specifically, the optical axes of the lenses 301, 303 and 106 are parallel to the Y direction.

The laser light L2 coming from the capillary 201 enters the lens 301, the λ/4 plate 302, and the lens 303 in this order. The laser light L2 passes through the lens 301, the λ/4 plate 302, and the lens 303, and then enters the mirror 304. The lens 303 concentrates the laser light L2 on the mirror 304.

The mirror 304 has a reflecting surface orthogonal to the optical axes of the lenses 301 and 303. Therefore, the mirror 304 reflects the laser light L2 coming from the lens 303 toward the lens 303. That is, the laser light L2, which has traveled in the +Y direction from the lens 303, is turned back by the mirror 304, so that it travels in the -Y direction.

The laser light L2 reflected by the mirror 304 enters the lens 303, the λ/2 plate 302, and the lens 301 in this order. The laser light L2 passes through the lens 303, the λ/2 plate 302, and the lens 301, and then enters the capillary 201. The lens 301 concentrates the laser light L2 on the sample S, which is flowing in the capillary 201. Note that the laser light L2 goes and returns through the λ/4 plate 302. That is, the laser light L2 that has passed through the capillary 201 passes through the λ/4 plate 302 twice, and then enters the capillary 201 again. Therefore, the laser light L2 becomes linearly-polarized light in the direction orthogonal to the linearly-polarized light of the laser light L1.

As described above, the laser light L2 enters the sample S from the -Y direction. By using the first and second irradiation optical systems 100 and 300, it is possible to apply laser light to the sample S from both directions. That is, as shown in Fig. 2, the laser light L1 is incident on the sample S from the +Y direction, and the laser light L2 is incident on the sample S from the -Y direction.

A part of the laser light L2 that is incident on the sample S is scattered and reflected, and then enters the objective lens 401. As described above, the sample S is illuminated by the laser lights L1 and L2. The laser lights L1 and L2 are scattered in the sample S and become scattered light L3. The laser lights L1 and L2 serve as excitation light for exciting the sample S. Therefore, the scattered light L3 contains Raman scattered light which serves as signal light. When the laser lights L1 and L2 excite particles 205, Raman scattered light is generated by the particles 205. The Raman scattered light propagates through the measurement optical system 500 and is spectroscopically measured by a spectroscope 510. Note that the measurement optical system 500 will be described later.

Further, a part of the laser light L2 passes through the capillary 201 and the sample S, and further travels in the -Y direction. Then, the laser light L2 passes through the lens 106, the lens 105, and the laser line filter 104 in this order. The laser light L2, which has passed through the laser line filter 104, enters the Glan-laser prism 103. The Glan-laser prism 103 reflects the laser light L2, which has originally traveled in the -Y direction, toward a beam dump 109. In this way, it is possible to the reduce the light that returns to the laser light source 101. The beam dump 109 absorbs the laser light L2. Therefore, it is possible to reduce the laser light L2 that becomes stray light. Further, the beam dumps 108 and 109 may be cooled.

As described above, a part of the scattered light L3 coming from the sample S enters the objective lens 401. The measurement optical system 500 is an optical system for spectroscopically measuring the Raman scattered light contained in the scattered light L3 exiting from the objective lens 401. Further, the observation optical system 400 is an optical system for observing the sample S.

Firstly, the observation optical system 400 will be described. The observation optical system 400 includes the objective lens 401, a filter 402, a lens 403, and a camera 404.

As described above, a part of the scattered light L3 enters the objective lens 401. The objective lens 401 refracts the scattered light L3 coming from the focal point so that it becomes a parallel luminous flux. The scattered light L3 exiting from the objective lens 401 enters the filter 402.

The filter 402 is, for example, a short-pass filter and lets light having the laser wavelength pass therethrough. The filter 402 serves as a beam splitter that branches light according to the wavelength. Specifically, the filter 402 lets light having a wavelength of 532 nm or shorter pass therethrough, and reflects light having a wavelength longer than 532 nm. Therefore, the filter 402 branches Raman scattered light L5 from Rayleigh scattered light having the laser wavelength. The part of the scattered light L3 having entered the filter 402 that passed through the filter 402 is referred to as observation light L4, and the part thereof that has been reflected by the filter 402 is referred to as Raman scattered light L5.

The observation light L4, which has passed through the filter 402, enters the lens 403. The lens 403 concentrates the observation light L4 in the camera 404. The camera 404 takes an image of the sample S, which is flowing in the capillary 201. The camera 404 may be, for example, a CCD (Charge Coupled Device) camera or a CMOS (Complementary Metal Oxide Semiconductor) image sensor. As described above, the camera 404 can take an optical image of the sample S by detecting the observation light L4.

Next, the measurement optical system 500 for performing Raman spectroscopic measurement will be described. The measurement optical system 500 is an optical system for guiding the Raman scattered light to the spectroscope 510. The measurement optical system 500 includes the objective lens 401, a filter 402, a lens 501, a filter 502, a mirror 503, a lens 504, a filter 505, and a lens 506. Further, the spectroscope 510 also includes an incident slit 511, a spectroscopic unit 512, and a photodetector 513. The objective lens 401 and the filter 402 are commonly used by both the observation optical system 400 and the measurement optical system 500.

As described above, a part of the scattered light L3 containing the Raman scattered light enters the objective lens 401. The objective lens 401 refracts the scattered light L3 coming from the focal point so that it becomes a parallel luminous flux. The scattered light L3 exiting from the objective lens 401 enters the filter 402.

The filter 402 branches the scattered light L3 according to the wavelength. The filter 402 branches the Raman scattered light L5 from the scattered light L3 having the same wavelength as the laser wavelength. The filter 402 reflects the Raman scattered light L5 contained in the scattered light L3.

The Raman scattered light L5 reflected by the filter 402 is refracted by the lens 501 and enters the filter 502. The filter 502 is a short-pass filter having a wavelength of 540 nm. Therefore, the Raman scattered light L5 is reflected by the filter 502 and incident on the mirror 503. The Raman scattered light L5 reflected by the mirror 503 enters the spectroscope 510 through the lens 504, the filter 505, and the lens 506. Note that the filter 505 is a long-pass filter having a wavelength of 532 nm.

The lens 506 concentrates the Raman scattered light L5 on the incident slit 511 of the spectroscope 510. The longitudinal direction of the incident slit 511 corresponds to the line direction of the laser lights L1 and L2. That is, the longitudinal direction of the incident slit 511 corresponds to the X direction, which is the channel direction of the capillary 201.

The Raman scattered light L5 that has passed through the incident slit 511 is spectrally dispersed by the spectroscopic unit 512. The spectroscopic unit 512 includes a wavelength dispersing element such as a grating or a prism. Therefore, the spectroscopic unit 512 spectrally disperses the Raman scattered light L5. The Raman scattered light L5 spectrally dispersed by the spectroscopic unit 512 enters the photodetector 513.

The photodetector 513 is a two-dimensional array photodetector, and includes a plurality of light-receiving pixels arranged in an array. The photodetector 513 is a two-dimensional photodetector such as a CCD (Charge Coupled Device) camera or a CMOS (Complementary Metal Oxide Semiconductor) image sensor. In this example, the photodetector 513 is a CCD with an electronic image multiplying function (i.e., EMCCD).

The photodetector 513 includes, for example, a plurality of pixels arranged in the horizontal direction (H direction) and the vertical direction (V direction). The horizontal direction of the pixel arrangement of the photodetector 513 corresponds to the spectral-dispersion wavelength, and the vertical direction thereof corresponds to the X direction in the sample S. The pixel address in the vertical direction of the photodetector 513 corresponds to the position in the slit aperture. That is, the pixel address in the vertical direction of the photodetector 513 corresponds to the position in the X direction in the sample S.

As described above, the measurement optical system 500 propagates the Raman scattered light L5 to the spectroscope 510. Then, the spectroscope 510 spectroscopically measures the Raman scattered light L5. In this way, it is possible to measure the Raman spectrum of the particles 205 contained in the sample S.

As shown in Fig. 2, each of the laser lights L1 and L2 is concentrated so as to become a line beam of which the longitudinal direction is parallel to the X direction. The laser lights L1 and L2 are concentrated at a line-shaped light-concentrated position 208 extending along the capillary 201.

The laser lights L1 and L2 serve as sheet-like optical tweezers that two-dimensionally trap particles 205 flowing in the capillary 201. The laser lights L1 and L2 trap particles 205 by optical trapping. Since optical pressures can be applied to the particles 205 from both sides thereof, it is possible to prevent the particles 205 from deviating in the Y direction. The light-concentrated position 208 of the sheet-like laser lights L1 and L2 becomes an optical trapping area.

Optical trapping is to trap, by using scattering of light and an intensity gradient force, particles in a potential well, which is determined by the refractive index of the particles relative to the medium therearound and the intensity gradient of the incident light field. Optical trapping using laser light is also called "laser tweezers", and is used to trap particles having sizes in the order of micrometers or nanometers and manipulate the position thereof.

It is possible to spatially converge a flow of particles having sizes in the order of micrometers or nanometers in a micro-fluidic channel. By using optical trapping, it is possible to converge particles having a wider range of particle diameters. Further, it is also possible to control particles while keeping their velocity constant even at a low flow velocity.

Optical trapping is used in many biological applications in order to accurately dispose particles 205 during measurement or to sort out particles after measurement. When laser light is concentrated into a line beam, it is also called linear optical tweezers. Linear optical tweezers make it possible to guide particles along linear laser light by an induced optical gradient force. For example, since the line beam and the capillary 201 are parallel to each other, a plurality of particles 205 flow in one line in the capillary 201 in the X direction. The sheet-like laser lights L1 and L2 for two-dimensionally trapping particles 205 are concentrated so as to extend along the center (e.g., the center line) of the capillary 201. Needless to say, the directions of the line beam and the capillary 201 are not limited to the directions parallel to each other. That is, as long as the line direction of the line beam is along the direction of the capillary 201, the line direction of the line beam may be tilted from or parallel to the direction of the capillary 201.

The flow of particles can be controlled by making the distribution of intensity of the laser lights L1 and L2 uneven in the X direction. Further, it is also possible to shift the light-concentrated positions of the laser lights L1 and L2 from each other, instead of making them coincide with each other, in at least one of the XYZ directions. By shifting the light-concentrated positions of the laser lights L1 and L2 from each other in the XYZ directions, it is possible to make the optical pressures applied to the particles from both sides thereof equal to each other.

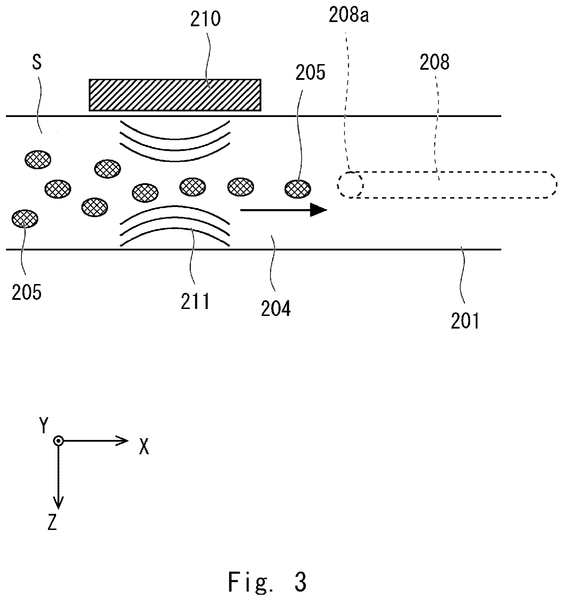

Further, as shown in Figs. 2 and 3, a transducer 210 is attached to the capillary 201. The transducer 210 is fixed to the surface on the - Z side of the capillary 201. The transducer 210 is, for example, a piezoelectric element and vibrates according to an electric signal. The transducer 210 generates a standing sound wave in the capillary 201. In this way, it is possible to control the position of particles 205.

The transducer 210, which is located upstream of the optical trapping area, serves as converging means for converging particles 205. The transducer 210 generates a sound wave 211 on the upstream side of the light-concentrated position 208. Particles 205 are converged on the YZ plane by the sound wave 211 generated by the transducer 210. The laser light is concentrated at the position immediately after, i.e., immediately downstream of, the transducer 210 in the X direction. The position at which particles 205 are converged by the acoustic convergence substantially coincides with the start point of the optical sheet. The position at which particles 205 are converged by the acoustic convergence coincides with the light-concentrated position 208 on the YZ plane. Therefore, a plurality of particles 205 are aligned in one line so that they are converged at the start point 208a of the light-concentrated position 208. The transducer 210 converges particles 205 on the upstream side of the light-concentrated position 208 in the channel direction so that the particles 205 flow to the light-concentrated position 208.

The transducer 210 is disposed on the upstream side of the light-concentrated position 208. In this way, the position of particles can be controlled more precisely. For example, the laser lights L1 and L2 can be applied to particles 205 in a state where they are aligned in one line. Further, the transducer 210 is fixed so that its vibration direction is orthogonal to the channel direction. Therefore, particles can be properly converged. Further, the transducer 210 is disposed on the surface on the side opposite to the side on which the objective lens is located. Therefore, the transducer 210 can be disposed without interfering with the objective lens and the like.

The position of particles 205 can be precisely controlled by the effect of the optical sheet which is located after, i.e., downstream of, the acoustic convergence. In this way, it is possible to acquire a video image or spectrum of, for example, fluorescence or Raman flow cytometry in corporation with a micro-spectroscopic apparatus. In this embodiment, the trapping laser also functions as an excitation light source. Needless to say, laser light emitted from a light source other than the excitation light source may be used as the trapping laser. It is possible to collect signal light coming from the sample S by the objective lens 401 and send the collected signal light to the spectroscope 510 and/or the camera 404. Further, the accuracy of the control can be improved by applying laser light to the capillary 201 from both directions.

Further, although the transducer 210 is used as the converging means for converging particles 205 on the upstream side of the light-concentrated position 208, other types of converging means may be used. For example, it is possible to send a particle flow to a laser trapping area by using a less accurate conversing technique such as acoustic convergence, inertial convergence, or hydrodynamic convergence. Then, the position where particles 205 flow in the capillary 201 can be controlled more precisely by using laser lights L1 and L2 for laser trapping. Therefore, it is possible to converge particles to a proper position and thereby efficiently spectroscopically measure Raman scattered light.

It is possible to make particles flow to an observation area or a measurement area at a low flow rate with high spatial convergence. It is expected that the accuracy of the measurement of the content of particles and dynamics thereof will be improved. The position of particles 205 can be precisely controlled, so that spectroscopic measurement can be performed with high sensitivity. It is possible to provide an analysis technique combined with a highly sensitive spectroscopic measuring apparatus such as Raman spectroscopic flow cytometry. Further, a constant particle flow with high spatial convergence is obtained for particles 205 of a wide range of diameters from micrometers to nanometers even at low a flow velocity. Therefore, various specimens can be analyzed.

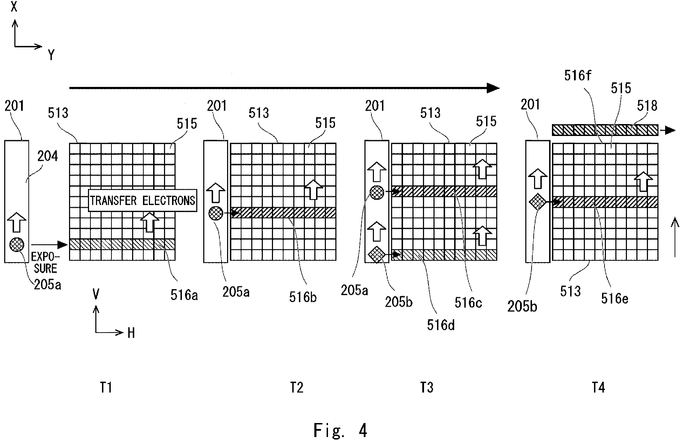

Further, in this embodiment, the influence of noises can be reduced by synchronizing the transfer speed of the charge in the photodetector 513 with the moving speed of particles 205 in the capillary 201. This feature will be described with reference to Fig. 4. Fig. 4 schematically shows the movement of particles in the capillary 201 and the arrangement of pixels 515 in the photodetector 513.

The photodetector 513 is a CCD camera that successively transfers signal charges. Therefore, each pixel in the photodetector 513 includes a photodiode and a charge coupling element. The photodiode generates a signal charge according to the received light. The charge coupling element accumulates signal charges and transfers the accumulated signal charge to the next pixel. Specifically, the charge coupling element successively transfers signal charges by a bucket-brigade manner. The signal charge transferred to the pixel in the last row is read out and is A/D (Analog to Digital)-converted.

The H direction in the photodetector 513 corresponds to the wavelength dispersion direction, and the V direction corresponds to the X direction position in the capillary 201. The transfer direction of signal charges is the V direction. The signal charge in each pixel is successively transferred in the V direction. The signal charges in one row along the H direction are successively transferred to the next pixels. The pixel address in the H direction corresponds to the wavelength of the Raman scattered light. The V direction corresponds to the line direction of the laser lights L1 and L2, i.e., the X direction.

As shown in Fig. 4, a particle 205a is moving in the +X direction in the capillary 201. Then, the photodetector 513 functions as a TDI (Time Delay Integration) sensor that transfers a signal charge in synchronization with the moving speed of the particle 205a. In Fig. 4, Raman scattered light L5 is detected in the order of a timing T1 to a timing T4. The pixel 515 of the photodetector 513 has a photodiode and a charge coupling element as described above. The behavior of signal charges that have been generated by detecting Raman scattered lights coming from particles 205a and 205b flowing in the capillary 201 will be described hereinafter.

At the timing T1, Raman scattered light coming from the particle 205a is detected in a pixel row 516a of the photodetector 513. That is, the Raman scattered light from the particle 205a is spectrally dispersed in one pixel row 516a. In the pixel row 516a, detection wavelengths in pixels having different addresses in the H direction are different from one another Each pixel 515 in the pixel row 516a generates a signal charge according to the amount of received light. Signal charges generated in the pixels 515 in the pixel row 516a are accumulated in the charge coupling elements and are successively transferred to the next pixels in the +V direction. Needless to say, signal charges are also generated according to the amount of received light in pixels 515 in rows other than the pixel row 516a.

When the particle 205a moves from the position at the timing T1, a configuration shown at a timing T2 is obtained. At the timing T2, the particle 205a has already moved to a position corresponding to a pixel row 516b. Raman scattered light coming from the particle 205a is detected in the pixel row 516b. Further, at the timing T2, the signal charges generated in the pixel row 516a at the timing T1 have already been transferred to the pixel row 516b. The signal charges generated in the pixels 515 in the pixel row 516b are accumulated together with the signal charges generated in the pixels 515 in the pixel row 516a at the timing T1.

Further, when the particle 205a further moves, a configuration shown at a timing T3 is obtained. At the timing T3, the particle 205a has already moved to a position corresponding to a pixel row 516c. Raman scattered light generated in the particle 205a is detected at pixels 515 in the pixel row 516c. At the timing T3, the signal charges generated in the pixel row 516b at the timing T2 have already been transferred to the pixel row 516c. The signal charge generated in each pixel in the pixel row 516c is accumulated together with the signal charges generated at the timings T1 and T2.

Further, at the timing T3, the next particles 205b has already reached the light-concentrated position. Specifically, the particles 205b has already moved to a position corresponding to a pixel row 516d. Raman scattered light generated in the particles 205b is detected in the pixel row 516d.

Then, at a timing T4, the particle 205a has already passed the last pixel row 516f. Signal charges 518 resulting from the Raman scattered light coming from the particle 205a are collectively read out. The signal charges 518 include signal charges generated in a plurality of pixel rows. The photodetector 513 collectively reads out the signal charges generated in the plurality of pixel rows. These signal charges are A/D-converted into detection data.

Further, at the timing T4, the particles 205b has already moved to a position corresponding to a pixel row 516e. Raman scattered light generated in the particles 205b is detected in the pixel row 516e. At the timing T4, the signal charges generated in the pixel row 516d at the timing T2 have already been transferred to the pixel row 516e. The signal charge generated in each pixel in the pixel row 516e is accumulated together with the signal charge generated in each pixel in the pixel row 516d at the timing T3.

As described above, the flow velocity of the fluid 204 is set so that the moving speed of particles 205 in the capillary 201 coincides with the transfer speed of the signal charges in the photodetector 513. The photodetector 513 successively transfers the signal charge generated in each pixel 515 in the V direction. The V direction, which is the transfer direction, is a direction corresponding to the line direction of the laser lights L1 and L2. Further, the V direction is the longitudinal direction of the capillary 201. The photodetector 513 successively shifts signal charges generated in a plurality of pixel rows, and then collectively reads out them. In this way, background light, which would otherwise be caused by the accumulation of reading noises, does not occur, so that a ratio SBR (Signal To Background Ratio) of the Raman signal intensity S to the background intensity B can be increased. A Raman spectrum can be properly measured.

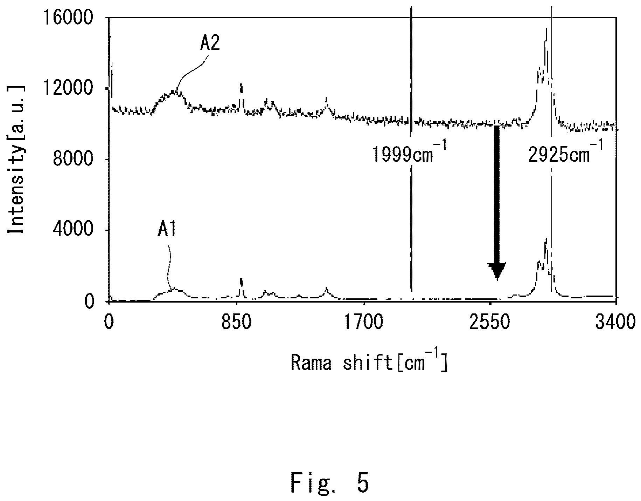

Fig. 5 shows a measurement result A1 which is obtained when signal charges are added up on the CCD. Further, Fig. 5 also shows a measurement result A2 which is obtained when signal charges for each pixel row are first read out and then added up. Fig. 5 shows Raman spectra in the case where the sample is ethanol. The horizontal axis indicates the wave number (cm⁻¹) of the Raman shift, and the vertical axis indicates the output intensity of the photodetector 513.

The output intensity at a wave number 2,925 cm⁻¹ is defined as Raman signal intensity S, and the output intensity at 1,999 cm⁻¹ is defined as background intensity B. By using the reading-out technique according to this embodiment, the SBR could be increased by a factor of about 52.

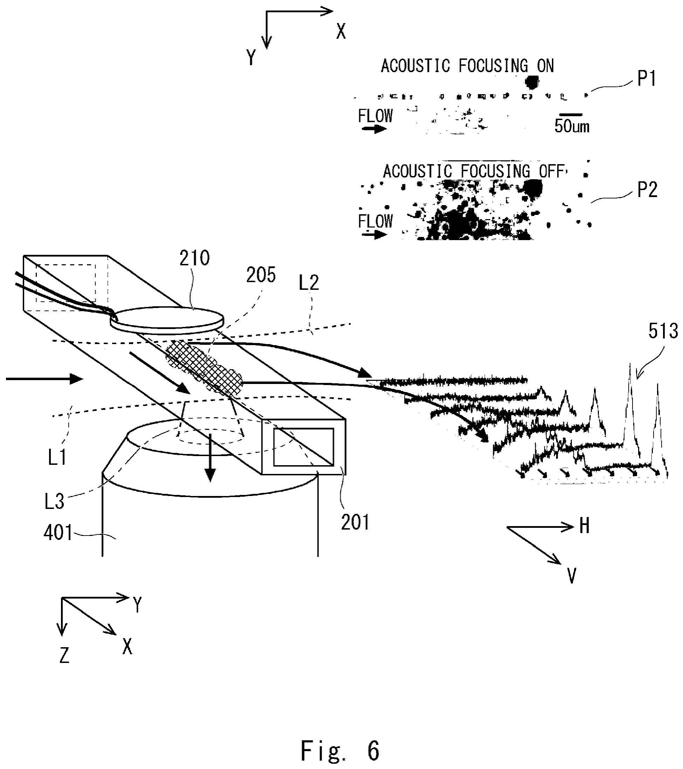

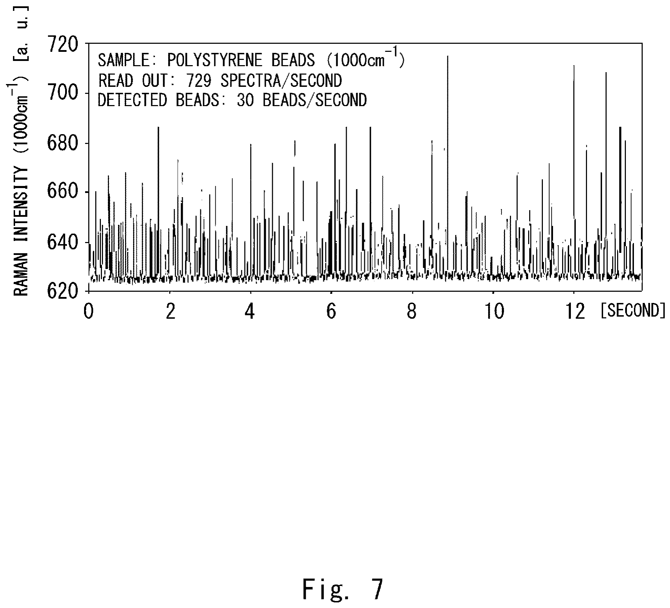

Figs. 6 and 7 are drawings for explaining results of measurement by the spectroscopic measuring apparatus 1. Note that polystyrene beads are used as the particles of the sample S. The flow velocity in the capillary 201 is adjusted so that the number of beads flowing in the capillary 201 is 30 beads/second. The moving speed of particles substantially coincides with the transfer speed of signal charges in the photodetector 513.

Fig. 6 shows photographed images P1 and P2 taken by the camera 404. The photographed image P1 is an image that is taken when the transducer 210 is turned on, and the photographed image P2 is an image that is taken when the transducer 210 is turned off. By acoustic convergence by the transducer 210, particles are aligned in one line and flow in the capillary 201.

The photodetector 513 transfers and accumulates signal charges. The photodetector 513 successively detects Raman scattered light from one particle 205 in a plurality of pixel rows. The photodetector 513 accumulates signal charges generated in the plurality of pixel rows, and then collectively reads out them. Therefore, the number of signal charges increases each time they are transferred. In this way, a Raman spectrum can be measured with a high SBR.

Fig. 7 shows changes in the Raman intensity at a wave number of 1,000 cm⁻¹, at which polystyrene exhibits a Raman shift, over time. At a timing at which a particle 205 exists, high Raman intensity can be obtained. At a timing at which no particle exists, the Raman intensity is low. The reading-out rate of the Raman spectrum is 729 spectra/second. That is, the Raman spectrum can be measured about every 1.3 msec. The reading-out time of the photodetector 513 is sufficiently shorter than the exposure time.

Further, the magnification in the measurement optical system 500 is low, and the size of each pixel is determined according to the size of a particle 205. For example, in the measurement optical system 500 from the capillary 201 to the spectroscope 510, the magnification may be such a magnification that the size of each pixel in the photodetector 513 corresponds to the size of a particle 205. The size of a particle projected on the photodetector 513 is roughly equal to the size of a pixel. The size of a particle projected on the photodetector 513 is preferably equal to or smaller than the size of a pixel. That is, in the exposure time corresponding to one frame of the photodetector 513, Raman scattered light coming from one particle 205 is detected in one pixel row. In this way, the intensity of the Raman scattered light in one pixel can be increased, so that the SBR can be increased.

Further, in the observation optical system 400, the camera 404 takes an image of the sample at the light-concentrated position 208. Then, the position of particles 205 in the capillary 201 may be adjusted based on the photographed image of the camera 404. For example, the position of particles 205 can be adjusted by changing the light-concentrated position 208 of the laser lights L1 and L2. The light-concentrated position 208 is adjusted so that particles 205 move to the center of the field of view of the objective lens 401 in the Y direction. Specifically, the light-concentrated position 208 is adjusted so that the center of the capillary 201 coincides with the center of the objective lens 401, and so that particles 205 flow through the center of the capillary 201.

The flow velocity of the sample S in the capillary 201 may be adjusted based on the photographed image of the camera 404. The flow velocity in the capillary 201 can be adjusted by adjusting the output of the pump or changing the cross-sectional area of the tube (e.g., pressing the tube).

The position of the light-concentrated position 208 in the Y direction can be adjusted by shifting the positions of the lens 105, the lens 106, the lens 301, the lens 303, or the mirror 304 shown in Fig. 1 along the optical axis. A control unit (not shown) may shift the positions of these optical elements according to the position of particles in the observation image. Further, the position at which particles 205 are converged can also be adjusted by changing the strength and/or frequency of the sound wave generated in the transducer 210.

Note that the laser light L1, which has passed through the sample S, becomes the laser light L2 and returns to the sample S. That is, the laser light L2 reflected by the mirror 304 is applied to the sample S from the -Y direction. At the light-concentrated position 208, the intensity of the laser light L2 is lower than that of the laser light L1. The optical pressure of the laser light L1 is higher than that of the laser light L2. Therefore, the light-concentrated position 208 may be adjusted while taking the difference between the optical pressures of the laser lights L1 and L2 into consideration. For example, the light-concentrated positions of the laser lights L1 and L2 may be slightly shifted from each other in the Y direction.

Further, the laser light emitted from the laser light source 101 may be branched by a beam splitter such as a half mirror, and the sample S may be irradiated with the laser light from both directions. Alternatively, two laser light sources may be prepared, and the sample S may be irradiated with two laser lights.

The laser light source serving as the excitation light source may be a laser light source different from the laser light source for the laser trapping. In this case, the laser light for the laser trapping and the laser light for the excitation may be coaxially applied to the sample S, or may be applied thereto from different directions. Further, an observation light source for photographing performed by the camera 404 may be provided separately from the laser light source for the laser trapping. The observation light source may be a lamp light source or the like instead of a laser light source.

By applying two laser lights from opposite directions, optical pressures can be applied from both directions. Therefore, the position of particles can be precisely controlled. Further, the irradiation directions of the two laser lights do not have to be directly opposite to each other. That is, the optical axes of the two laser lights L1 and L2 do not have to be parallel to each other. Further, laser lights for laser trapping may be applied from three or more directions.

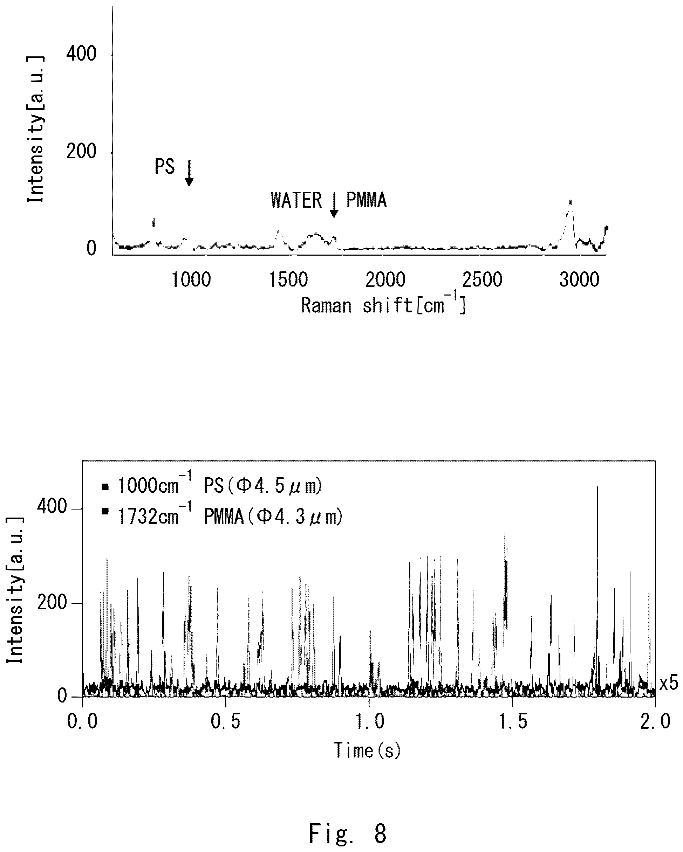

Fig. 8 shows graphs showing results of spectroscopic measurement performed by the spectroscopic measuring apparatus 1. The upper part of Fig. 8 is a graph showing a result of measurement of a Raman spectrum, and the lower part of Fig. 8 is a graph showing changes in detected intensity over time. In this example, a mixture of polystyrene (PS) beads and PMMA (polymethylmethacrylate) resin beads is used as the sample S. The diameter of the polystyrene beads is 4.5 µm, and the diameter of the PMMA beads is 4.3 µm. The graphs show changes in the intensity of Raman light at a wave number 1,000 (cm⁻¹), at which polystyrene exhibits a Raman shift, over time, and those in the intensity of Raman light at a wave number 1,732 (cm⁻¹), at which PMMA exhibits a Raman shift, over time. The reading-out rate of the Raman spectrum is 729 spectra/second.

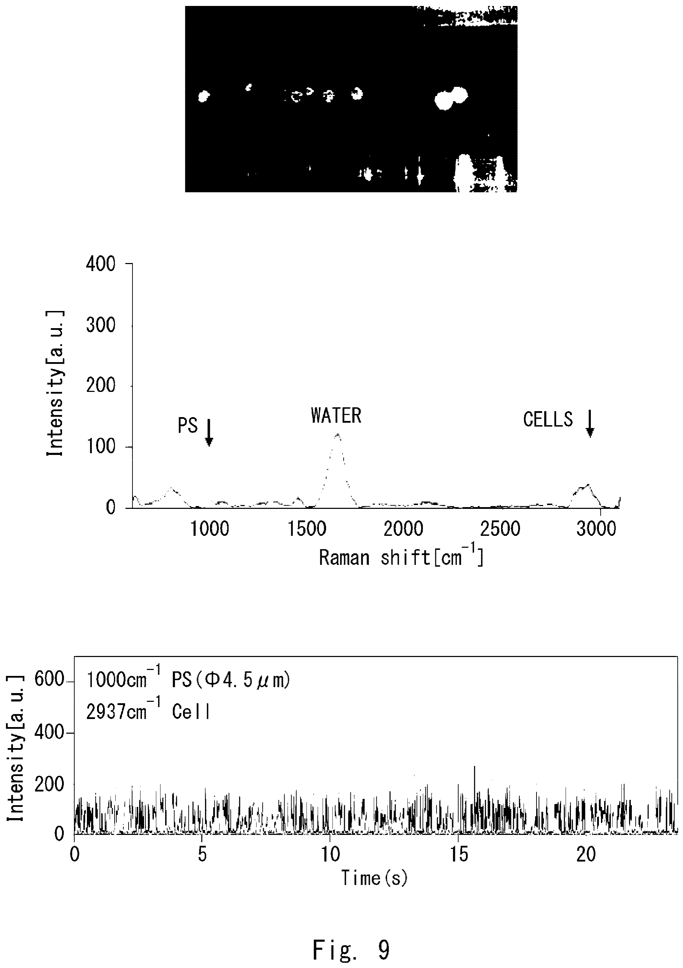

Fig. 9 shows graphs and the like showing results of measurement of a mixture of cells and polystyrene beads, which is used as the sample S. The upper part of Fig. 9 shows an observation image taken by the camera 404. The middle part of Fig. 9 shows a result of measurement of a Raman spectrum, and the lower part of Fig. 9 is a graph showing changes in detected intensity over time. In this example, HeLa cells and polystyrene beads having a diameter of 4.5 µm flow in the capillary 201. Water is used as the fluid flowing in the capillary 201. The graphs show changes in the intensity of Raman light at a wave number 1,000 (cm⁻¹), at which polystyrene exhibits a Raman shift, over time, and those in the intensity of Raman light at a wave number 2,937 (cm⁻¹), at which HeLa cells exhibit a Raman shift, over time. The reading-out rate of the Raman spectrum is 424 spectra/second.

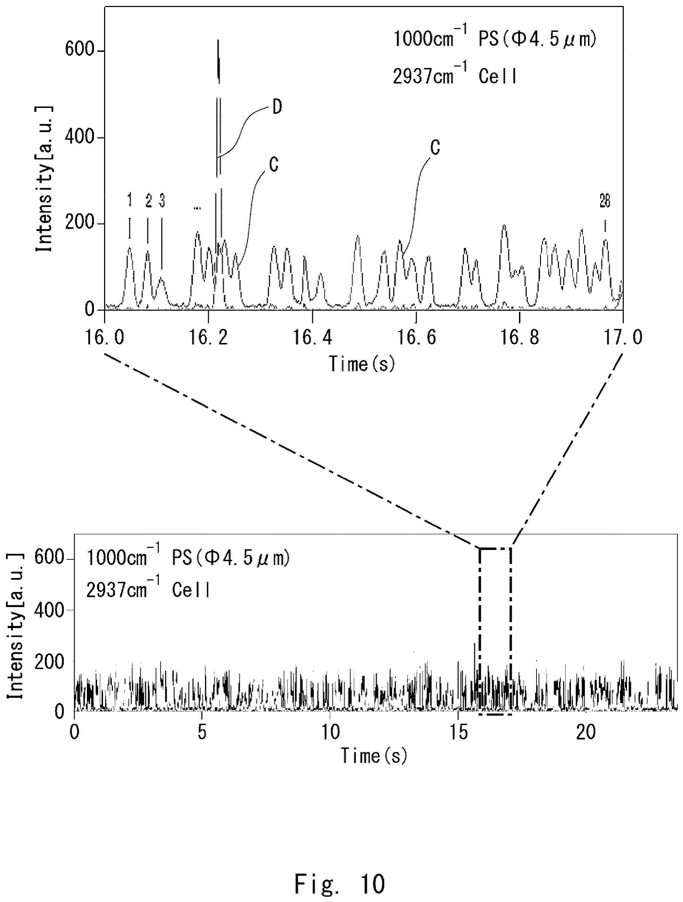

Fig. 10 shows a graph showing changes over time shown in Fig. 9 and an enlarged part thereof. In Fig. 10, a graph C shows changes in HeLa cells over time, and a graph D shows changes in polystyrene over time. That is, the graph C shows changes in the intensity of Raman light at a wave number of 2,937 (cm⁻¹) over time, and the graph D shows changes in the intensity of Raman light at a wave number of 1,000 (cm⁻¹) over time.

The spectroscopic measuring method is a Raman spectroscopic measuring method for measuring a Raman spectrum of particles contained in a sample flowing in a channel. The spectroscopic measuring method includes: a step of concentrating laser light for laser trapping into a first line beam extending along the channel and applying the concentrated laser light to a light-concentrated position in the channel from a first direction; a step of concentrating laser light for laser trapping into a second line beam extending along the channel and applying the concentrated laser light to the light-concentrated position from a second direction opposite to the first direction; and a step of spectrally dispersing Raman scattered light generated at the light-concentrated position and detecting the spectrally-dispersed Raman scattered light by a two-dimensional array photodetector including pixels arranged along a line direction of a line beam.

### Second Embodiment

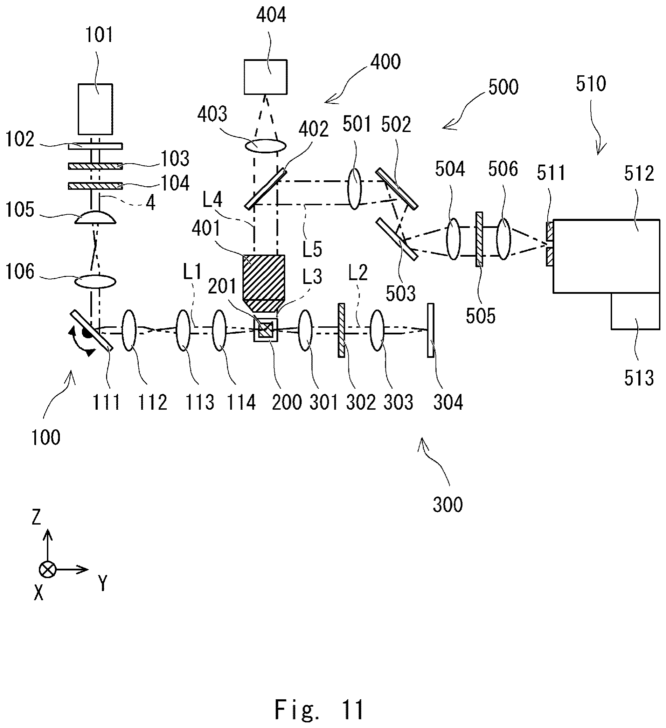

A spectroscopic measuring apparatus 1 according to a second embodiment will be described with reference to Fig. 11. Fig. 11 shows an optical system of the spectroscopic measuring apparatus 1. In this embodiment, a configuration for scanning the laser light L1 is added to the first irradiation optical system 100. Note that the fundamental configuration of the spectroscopic measuring apparatus 1 is similar to that shown in Fig. 1, and therefore the description thereof will be omitted. Differences from the first embodiment will be described hereinafter.

The first irradiation optical system 100 includes a galvano-mirror 111, a lens 112, a lens 113, and a lens 114. Laser light L1 exiting from the lens 106 is incident on the galvano-mirror 111. The laser light L1 reflected by the galvano-mirror 111 enters the lens 112. The galvano-mirror 111 rotates at a high speed so as to deflect the laser light L1. As the reflection angle of the galvano-mirror 111 changes, the laser light L1 can be scanned in the Z direction.

The laser light L1 coming from the galvano-mirror 111 enters a sample holder 200 through the lenses 112, 113 and 114. The laser light L1, of which the optical axis is parallel to the Y direction, is incident on the sample S. The first irradiation optical system 100 applies sheet-like illumination light (also called sheet illumination), of which the thickness direction is parallel to the Z direction, to the sample S. As shown in the first embodiment, the sample S is flowing in the capillary 201 in the sample holder 200.

The laser light L1 is scanned in the Z direction on the sample S. Therefore, the light-concentrated position of the laser light L1 changes, i.e., moves, in the Z direction. The galvano-mirror 111 also scans the laser light L2 in the Z direction in a similar manner. The laser light L2 is incident at the same position as the laser light L1 on the sample S. The light-concentrated position of the laser light L2 may be the same as or different from the light-concentrated position of the laser light L1. Since the laser light L2 is scanned and incident on the sample S in a manner similar to the laser light L1, the description of the laser light L2 will be omitted as appropriate in the following description.

Note that the thickness of the sheet illumination in the Z direction can be made smaller than that of the sample S by increasing the NA of the sheet illumination. For example, the NA of the sheet illumination in the first irradiation optical system 100 and the second irradiation optical system 300 is set to 0.3. In this way, the thickness of the sheet illumination can be made smaller than that of the sample S. The galvano-mirror 111 scans the laser lights L1 and 12 in the optical-axis direction of the objective lens 401. For example, the galvano-mirror 111 scans the laser light in the Z direction by a distance equivalent to the size of the sample S or the particles thereof. In this way, the entire sample can be exposed to the laser light.

Further, the galvano-mirror 111 scans the laser light at a high speed. For example, the scanning cycle of the galvano-mirror 111 is made shorter than the exposure time (time corresponding to one frame) of the photodetector 513 of the spectroscope 510. That is, during the exposure time of the photodetector 513, the galvano-mirror 111 scans the sample S at least once in the Z direction. By doing so, background light, which would otherwise become noises, can be suppressed. Further, the exposure amount to the laser light in the sample S can be made uniform. Needless to say, an optical scanner other than the galvano-mirror 111 may be used. In this case, an optical scanner having a scanning cycle shorter than the exposure time of the photodetector 513 can be used.

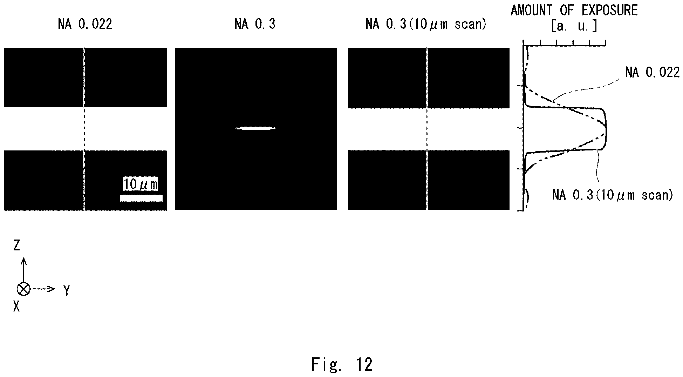

Fig. 12 shows a graph and the like for explaining a difference that occurs when the thickness of the sheet illumination is changed. Fig. 12 shows results of simulations of laser light when illumination is performed with NA=0.022 and when it is performed with NA=0.3. Fig. 12 shows two-dimensional images showing distributions of intensity of laser light on the YZ plane and profiles in the Z direction. Further, Fig. 12 shows, in a case where NA is high, i.e., NA=0.3, a distribution of intensity of laser light when scanning is not performed and a distribution of intensity of laser light when scanning is performed.

In the case of NA=0.022, the thickness (the size in the Z direction) of the sheet illumination at the light-concentrated position increases, so that the entire sample is irradiated with the laser light. In this case, the bottom part of the profile of the laser light in the Z direction widens. Therefore, scattered light coming from positions away from the sample S in the Z direction is detected by the spectroscope 510.

In the case of NA=0.3, the thickness of the sheet illumination at the light-concentrated position can be made smaller than when NA=0.022. Therefore, at the light-concentrated position, the size of the sheet illumination in the Z direction is sufficiently smaller than the channel. Further, the galvano-mirror 111 scans the laser light 10 µm in the Z direction. That is, the scanning width of the laser light is 10 µm. Note that the scanning width of the laser light may be adjusted according to the width of the capillary and/or the size of the sample.

When the laser light is scanned, the profile of the laser light becomes flat over substantially the entire sample S. By scanning thin sheet illumination, the rise of the profile of the laser light in the Z direction becomes steep. Further, the exposure amount of the sample S can be made constant in the Z direction, and background light coming from above and below the sample S can be reduced.

### Modified Example 1

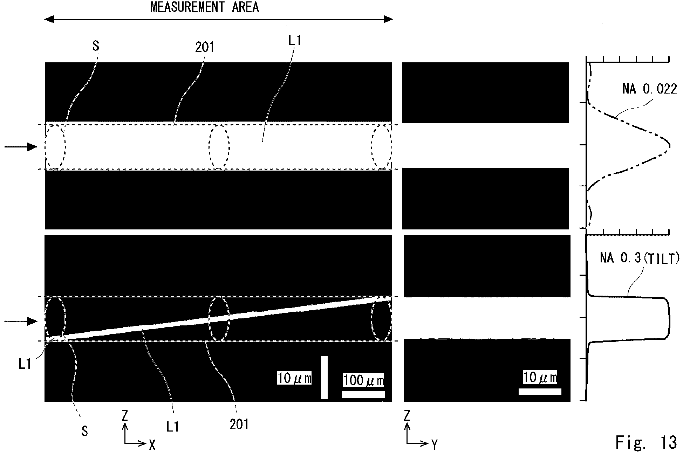

In Modified Example 1, the exposure amount of the sample S to the laser light is made constant without using the galvano-mirror 111. Therefore, for example, an optical system using no galvano-mirror 111 as shown in Fig. 1 can be used. In Modified Example 1, sheet illumination having a high NA is tilted on the XZ plane. Fig. 13 shows a graph and the like for explaining sheet illumination of Modified Example 1. Fig. 13 shows a graph and the like for explaining results of simulations when sheet illumination having a low NA is used and when sheet illumination having a high NA is tilted.

Fig. 13 shows distributions of intensity of laser light at the light-concentrated position on the XZ plane and the YZ plane. Further, Fig. 13 shows a profile of laser light in the Z direction at the light-concentrated position. In the sample holder 200, the capillary 201 is provided along the X direction. The sample S, which is a specimen, flows along the capillary 201 in the X direction.

As described in the second embodiment, in the case of sheet illumination having a low NA, since the bottom part of the profile is wide, background light coming from positions away from the sample S is detected by the spectroscope 510.

In Modified Example 1, the spectroscopic measuring apparatus 1 applies sheet illumination having a high NA to the sample S. The thickness of the sheet illumination in the Z direction is sufficiently smaller than the size of the sample S. Further, the sheet illumination is tilted on the XZ plane. Specifically, the sheet illumination is slightly tilted from the X axis so as to illuminate the capillary 201 from one end to the other end thereof in the Z direction. Therefore, the irradiation position (light-concentrated position) of the laser light in the Z direction changes according to the position of the capillary 201 in the X direction. As shown in Fig. 12, in Modified Example 1, the more the coordinate of the irradiation position of the laser light L1 in the X direction increase, the more the coordinate of the irradiation position thereof in the Z direction increases. For example, when the optical tweezer effect is not sufficiently high, the flow of the sample S in the capillary 201 is not parallel to the line direction. Further, the sample S flows along the capillary 201. The sample S, which is flowing in the capillary 201, is irradiated with sheet illumination tilted from the capillary 201. That is, the sample S is irradiated with sheet illumination thinner than the size of the sample S.

The sample S flows in the capillary 201 in the X direction. The irradiation position (light-concentrated position) of the laser light on the sample S is shifted in the Z direction according to the position in the X direction,. At the end of the measurement area on the -X side, the laser light L1 is incident on the end of the sample S on the -Z side, and at the end of the measurement area on the +X side, the laser light L1 is incident on the end of the sample S on the +Z side. At the center of the measurement area in the X direction, the laser light L1 is incident on the center of the sample S in the Z direction. As the sample S flows in the capillary 201, the irradiation position of the laser light changes, i.e., moves, in the Z direction. In this way, the entire sample S can be irradiated with the laser light in the Z direction. For example, the flow velocity may be adjusted so that the time by which the sample S passes through the measurement area is shorter than the exposure time of the photodetector 513. Therefore, the photodetector 513 adds up the signal over the time by which the sample S passes through the measurement area, and reads out the added-up signal.

As described above, when the longitudinal direction of the sheet illumination on the XZ plane is tilted from the channel direction of the capillary 201, the profile of the laser light in the Z direction becomes flat and the rise becomes steep. Therefore, as shown in the second embodiment, it is possible to make the exposure amount of the sheet illumination constant and suppress background light coming from above and below the sample S.

When the depth of the focus of the detection system is small, the x direction is parallel to the sheet illumination and the z direction is perpendicular to the sheet illumination. This is because when the detection NA is large and the magnification of the detection optical system is high, the depth that can be detected is roughly equal to the thickness of the sheet illumination. Therefore, the direction of the flow of particles is not limited to the direction parallel to the x direction. When the depth of the focus of the detection system is large, the sheet illumination can be tilted from the X direction according to the depth of the focus. Therefore, the line direction and the direction of the capillary 201 are not limited to the directions parallel to each other, and instead may be tilted from each other.

Note that although the configuration in which the sheet illumination is tilted from the X direction has been described above, the capillary 201 may be tilted from the X direction. For example, the sample holder 200 may be disposed on a tilted base tilted from the XY plane in the X direction. In this case, the laser light L1 becomes a line beam of which h the line direction is parallel to the X direction on the XZ plane. On the XZ plane orthogonal to the optical axis of the laser light L1, the longitudinal direction (line direction) of the laser lights L1 and L2 may be tilted from the channel direction of the capillary 201. The tilting angle can be determined according to the length of the measurement area and the diameter of the capillary 201.

### Modified Example 2

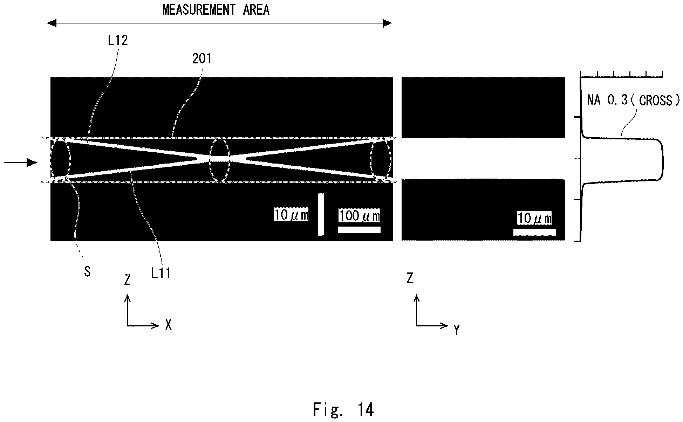

Sheet illumination in Modified Example 2 will be described with reference to Fig. 14. Fig. 14 shows a graph and the like for explaining the sheet illumination in Modified Example 2. Fig. 14 shows distributions of intensity of laser light at the light-concentrated position on the XZ plane and the YZ plane. Further, Fig. 14 shows a profile of laser light in the Z direction at the light-concentrated position. In Modified Example 2, since the sheet illumination has a high NA, the thickness of the sheet illumination is also smaller than the size of the sample S.

In Modified Example 2, two sheet illuminations L11 and L12 are applied to the capillary 201 at different angles. Regarding the sheet illumination L11, which is one of the two sheet illuminations, the more the coordinate of the irradiation position in the X direction increase, the more the coordinate of the irradiation position in the Z direction increases. Regarding the sheet illumination L12, which is the other sheet illumination, the more the coordinate of the irradiation position in the X direction increase, the more the coordinate of the irradiation position in the Z direction decreases. The sheet illuminations L11 and L12 are symmetrical to each other on the XZ plane. Therefore, on the XZ plane, the two sheet illuminations L11 and L12 are incident on the X-shaped part of the capillary 201. The two sheet illuminations L11 and L12 are converged in the Z direction so as to be sufficiently smaller than the width of the capillary 201.

When the sheet illuminations L11 and L12 are tilted from the channel direction of the capillary 201 as described above, the profile of the laser light in the Z direction becomes flat and the rise becomes steep. Therefore, as shown in the second embodiment, it is possible to make the exposure amount of the sheet illumination constant in the Z direction and suppress background light coming from above and below the sample S. Further, the sample S is entirely irradiated with the laser light in the width direction of the capillary (Z direction) without using an optical scanner.

Although the invention made by inventors of the present application has been described based on embodiments in a concrete manner, the present invention is not limited to embodiments described above and, needless to say, various modifications can be made to them without departing from the scope and spirit of the invention.

This application is based upon and claims the benefit of priority from Japanese patent application No. 2023-15370, filed on February 3, 2023, the disclosure of which is incorporated herein in its entirety by reference.

### Reference Signs List

- 1: SPECTROSCOPIC MEASURING APPARATUS
- 100: FIRST ILLUMINATION OPTICAL SYSTEM
- 101: LASER LIGHT SOURCE
- 102: λ/2 PLATE
- 103: GLAN-LASER PRISM
- 104: LASER LINE FILTER
- 105: LENS
- 106: LENS
- 108: BEAM DUMP
- 109: BEAM DUMP
- 111: GALVANOMETER MIRROR
- 112: LENS
- 113: LENS
- 114: LENS
- 200: SAMPLE HOLDER
- 201: CAPILLARY
- 204: FLUID
- 205: PARTICLE
- 208: LIGHT-CONCENTRATED POSITION
- 210: TRANSDUCER
- 211: SOUND WAVE
- 300: SECOND IRRADIATION OPTICAL SYSTEM
- 301: LENS
- 302: λ/4 PLATE
- 303: LENS
- 304: MIRROR
- 400: OBSERVATION OPTICAL SYSTEM
- 401: OBJECTIVE LENS
- 402: FILTER
- 403: LENS
- 404: CAMERA
- 500: MEASUREMENT OPTICAL SYSTEM
- 501: LENS
- 502: FILTER
- 503: MIRROR
- 504: LENS
- 505: LENS
- 506: LENS
- 510: SPECTROSCOPE
- 511: INCIDENT SLIT
- 512: SPECTROSCOPIC UNIT
- 513: PHOTODETECTOR
- L1: LASER LIGHT (FIRST IRRADIATION LIGHT)
- L2: LASER BEAM (SECOND IRRADIATION LIGHT)
- L3: SCATTERED LIGHT
- L4: OBSERVATION LIGHT
- L5: RAMAN SCATTERED LIGHT
- S: SAMPLE

## Claims

1. A Raman spectroscopic measuring apparatus configured to measure a Raman spectrum of particles contained in a sample flowing in a channel, and comprising:
a first irradiation optical system configured to concentrate laser light for laser trapping into a first line beam extending along the channel and apply the concentrated laser light to a light-concentrated position in the channel from a first direction;
a second irradiation optical system configured to concentrate laser light for laser trapping into a second line beam extending along the channel and apply the concentrated laser light to the light-concentrated position from a second direction opposite to the first direction; and
a spectroscope configured to spectrally disperse Raman scattered light generated at the light-concentrated position and detect the spectrally-dispersed Raman scattered light by a two-dimensional array photodetector including pixels arranged along a direction corresponding to a line direction of a line beam.

2. The Raman spectroscopic measuring apparatus according to claim 1, further comprising converging means for converging the particles on an upstream side of the light-concentrated position in the channel.

3. The Raman spectroscopic measuring apparatus according to claim 1 or 2, wherein
the two-dimensional array photodetector transfers a signal charge generated at each pixel in a transfer direction corresponding to the line direction, accumulates the transferred signal charges, and collectively reads out the accumulated signal charges, and
a moving speed of the particles in the channel is substantially equal to a transfer speed of charges in the two-dimensional array photodetector.

4. The Raman spectroscopic measuring apparatus according to claim 2, wherein the converging means comprises a transducer configured to generate a sound wave in the channel.

5. The Raman spectroscopic measuring apparatus according to any one of claims 1 to 4, wherein the laser light for the laser trapping serves as excitation light.

6. The Raman spectroscopic measuring apparatus according to any one of claims 1 to 5, further comprising a camera configured to take an image of a sample at the light-concentrated position, wherein
the light-concentrated position in the channel is adjusted based on the photographed image taken by the camera.

7. The Raman spectroscopic measuring apparatus according to any one of claims 1 to 6, further comprising a camera configured to take an image of a sample at the light-concentrated position, wherein
a flow velocity of the sample in the channel is adjusted based on the photographed image taken by the camera.

8. The Raman spectroscopic measuring apparatus according to any one of claims 1 to 7, wherein in a measurement optical system from the channel to the spectroscope, a magnification is such a magnification that a size of a pixel in the two-dimensional array photodetector is a size corresponding to a size of the particle.

9. The Raman spectroscopic measuring apparatus according to any one of claims 1 to 8, further comprising an optical scanner configured to scan the laser light in an optical-axis direction of an objective lens into which the Raman scattered light enters, wherein
at the light-concentrated position of the laser light, the first and second irradiation optical systems concentrate the laser light so as to become smaller than the sample.

10. The Raman spectroscopic measuring apparatus according to any one of claims 1 to 8, wherein
the first and second irradiation optical systems concentrate the laser light so as to become smaller than the channel at the light-concentrated position of the laser light, and
a line direction of the first and second line beams is tilted from a channel direction of the channel on a plane orthogonal to an optical-axis direction of the first irradiation optical system.

11. A Raman spectroscopic measuring method for measuring a Raman spectrum of particles contained in a sample flowing in a channel, comprising:
a step of concentrating laser light for laser trapping into a first line beam extending along the channel and applying the concentrated laser light to a light-concentrated position in the channel from a first direction;
a step of concentrating laser light for laser trapping into a second line beam extending along the channel and applying the concentrated laser light to the light-concentrated position from a second direction opposite to the first direction; and
a step of spectrally dispersing Raman scattered light generated at the light-concentrated position and detecting the spectrally-dispersed Raman scattered light by a two-dimensional array photodetector including pixels arranged along a direction corresponding to a line direction of a line beam.

12. The Raman spectroscopic measuring method according to claim 11, wherein the particles are converged on an upstream side of the light-concentrated position in the channel.

13. The Raman spectroscopic measuring method according to claim 11 or 12, wherein
the two-dimensional array photodetector transfers a signal charge generated at each pixel in a transfer direction corresponding to the line direction, accumulates the transferred signal charges, and collectively reads out the accumulated signal charges, and
a moving speed of the particles in the channel is substantially equal to a transfer speed of charges in the two-dimensional array photodetector.

14. The Raman spectroscopic measuring method according to claim 12, wherein the particles are converged by a transducer configured to generate a sound wave in the channel.

15. The Raman spectroscopic measuring method according to any one of claims 11 to 14, wherein the laser light for the laser trapping serves as excitation light.

16. The Raman spectroscopic measuring method according to any one of claims 11 to 15, wherein
a camera takes an image of a sample at the light-concentrated position, and
a flow velocity of the sample in the channel is adjusted based on the photographed image taken by the camera.

17. The Raman spectroscopic measuring method according to any one of claims 11 to 16, wherein in a measurement optical system from the channel to the spectroscope, a magnification is such a magnification that a size of a pixel in the two-dimensional array photodetector is a size corresponding to a size of the particle.
